# EUROPÄISCHE PATENTSCHRIFT

(11) **EP 0 543 820 B1**
(45) Veröffentlichungstag und Bekanntmachung des Hinweises auf die Patenterteilung: **24.08.1994**
(21) Anmeldenummer: 91910613.8
(22) Anmeldetag: 03.06.1991
(51) Int. Cl.: G06F 11/00, G06F 11/18

(54) **MEHRRECHNERSYSTEM HOHER SICHERHEIT MIT DREI RECHNERN**
HIGHLY SAFE MULTI-COMPUTER SYSTEM WITH THREE COMPUTERS
SYSTEME MULTICALCULATEURS DE HAUTE SECURITE AVEC TROIS CALCULATEURS

(30) Priorität: 14.08.1990 EP 90115585
(43) Veröffentlichungstag der Anmeldung: 02.06.1993
(73) Patentinhaber: SIEMENS AKTIENGESELLSCHAFT, 80333 München (DE)
(72) Erfinder: GRONEMEYER, Michael, D-3302 Weddel (DE)
(86) Internationale Anmeldenummer: EP9101022
(87) Internationale Veröffentlichungsnummer: WO9203787

(56) Entgegenhaltungen:
- DE-A- 3 720 879
- INTERNATIONAL JOURNAL OF ELECTRONICS. Band 67, Nr. 1, Juni 1989, London GB, Seiten 1-6; H.-Y. Lo et al.: "Highly efficient flexible-purging redundancy scheme"
- IEEE TRANSACTIONS ON RELIABILITY. Band 39, Nr. 2, Juni 1990, New York, US, Seiten 217-225; Y. Chen et al.: "Implementing Fault-Tolerance via Modular Redundancy with Comparison"
- ADVANCES IN INSTRUMENTATION. Band 40, Nr. 2, Oktober 1985, Pittsburg, US, Seiten 979-990; W.N. Toy: "Fault Recovery Strategy of Tricon-1"

## Beschreibung

Die Erfindung bezieht sich auf ein Mehrrechnersystem nach dem Oberbegriff des Patentanspruches 1.

Ein solches Mehrrechnersystem ist aus Signal + Draht 66 (1974) 11, Seiten 214 u. 215 bekannt.

In der Firmendruckschrift der Standard Elektrik Lorenz SELMIS, Bestell-Nr. 1974.12822.Be, wird auf Seite 7 über ein sicheres Mehrrechnersystem aus drei signaltechnisch nicht sicheren Einzelrechnern berichtet, die sich gegenseitig durch Einlesen der von den jeweils anderen Rechnern erarbeiteten Ergebnisse auf Übereinstimmung vergleichen und von denen zwei als ordnungsgerecht arbeitend erkannte Rechner für die zweikanalige Steuerung des Prozeßgeschehens verwendet sind. Der dritte Rechner läuft als heiße Reserve" mit und dient dazu, bei Ausfall eines der betriebsführenden Rechner dessen Funktion zu übernehmen. Der Vergleich der von den einzelnen Rechnern eingelesenen Verarbeitungsergebnisse der anderen Rechner mit den selbst erarbeiteten Verarbeitungsergebnissen ist softwaremäßig realisiert.
Das ständige Einlesen und Uberprüfen der Verarbeitungsergebnisse in die Rechner erfordert Rechnerkapazität und verlangsamt damit die Prozeßsteuerung. Außerdem funktioniert der Vergleich nur solange auch der Rechner selbst funktioniert. Die Vergleichsrate beim Vergleich pro Programm ist gegenüber dem unmittelbaren Datenvergleich nur sehr begrenzt.

Aus Signal + Draht 66 (1974) 11, Seite 214 u. 215 ist ein aus drei Einzelrechnern bestehendes Dreirechnersystem bekannt, bei dem sich die Einzelrechner laufend über Hardware-Vergleicher auf Datenübereinstimmung prüfen. Die Ausgabe der Daten nach dem 2 von 3-Prinzip erfolgt über ein sicheres Auswahlelement, das die Aufgabe hat, die auf den internen Bussen der Einzelrechner liegenden Daten Bit für Bit sicher miteinander zu vergleichen, mehrere solcher Vergleichsergebnisse zusammenzufassen und in Abhängigkeit hiervon die Informationsausgänge des Auswahlelementes zu sperren oder freizugeben. Wie ein solches Auswahlelement zum Vergleich der jeweils drei Ausgangssignale der Rechner des Mehrrechnersystems im einzelnen konzipiert ist, läßt sich Signal + Draht nicht entnehmen. Aus der DE-AS 27 25 922 ist es lediglich bekannt, mindestens bei Datenabweichungen in den von den Rechnern gelieferten Ergebnissen dort eine Mehrheitsentscheidung durchzuführen, um so den defekten Rechner lokalisieren zu können. Aus der DE-PS 32 08 573 ist es ferner bekannt, diese Mehrheitsentscheidung in einer Majoritätsschaltung zu realisieren, in der alle möglichen Kombinationen von Vergleichsaussagen der drei Rechner abgespeichert sind. Abhängig von den jeweils vorliegenden Vergleichsaussagen werden aus einer Zuordnungstabelle Steuerbefehle zum Steuern von Umschaltern ausgelesen, über die die Verbindung zwischen einem als defekt erkannten Rechner und dem zu steuernden Prozeß aufzutrennen ist. Voraussetzung für das ordnungsgerechte Arbeiten dieser Majoritätsschaltung ist aber, daß der defekte Rechner nicht in irgendeiner Weise auf die anderen Rechner oder die Majoritätsschaltung einwirkt und diese zu einem unkontrollierten Funktionsverhalten veranlaßt.

Aufgabe der Erfindung ist es, ein Mehrrechnersystem nach dem Oberbegriff des Patentanspruches 1 anzugeben, das ohne Verwendung einer zentralen Majoritätsschaltung ein möglichst rasches Erkennen und Abschalten eines defekten Einzelrechners ermöglicht.

Die Erfindung löst diese Aufgabe durch die kennzeichnenden Merkmale des Patentanspruches 1. Die Rechnerabschaltung ist ausschließlich abhängig von dezentral organisierter Hardware.

Vorteilhafte Ausgestaltungen der Erfindung sind in den Unteransprüchen angegeben.

Anspruch 2 benennt die konkreten Mittel zum Abschalten eines defekten Rechners beim Erkennen seiner Funktionsunfähigkeit und Anspruch 3 Maßnahmen zur gegenseitigen Unterrichtung der Rechner über ihre Funktionsfähigkeit. Für den Fall, daß ein als defekt erkannter Rechner sich nicht selbst abschaltet, veranlassen die ausfallfreien Rechner das Abschalten des Rechnersystems und verhindern so das Entstehen gefährlicher Prozeßsteueraufträge.

Nach der Lehre des Anspruches 4 werden die miteinander zu vergleichenden Daten in den einzelnen Rechnern parallel erarbeitet und zwischen ihnen seriell übertragen. Die Merkmale des Anspruches 4 beinhalten auch die Mittel zum Vergleich dieser unterschiedlich organisierten Daten ohne Mehraufwand für eine Umorganisation.
Anspruch 5 benennt Maßnahmen zum Betrieb der Vergleicher und die Ansprüche 6 und 7 die Nutzung der Vergleicherausgangssignale zur Fehlerkennzeichnung.
Jeder Rechner veranlaßt für sich und unabhängig von den anderen Rechnern automatisch bei allen Ausgabebefehlen eine laufende Kontrolle der von ihm bereitgestellten Daten mit den von den Nachbarrechnern übermittelten Daten. Für den Fehlerfall ist nach der Lehre des Anspruches 8 jedoch auch vorgesehen, daß die noch funktionsfähigen Einzelrechner den Vergleichsvorgang für einen defekten Rechner erzwingen, wenn der Rechner selbst diesen Vergleichsvorgang aufgrund eines Fehlverhaltens nicht mehr vornehmen will.
Anspruch 9 benennt die Maßnahmen, durch deren Anwendung es möglich wird, auf einfache Weise neben den Ausgaben an die Peripherie auch andere zu vergleichende Daten in den Vergleichsvorgang einzubeziehen.
Um im Fehlerfall ungewollte gegenseitigen Beinflussungen der Rechner weitgehend auszuschließen, ist es von Vorteil, die Ausgänge der Rechner gemäß Anspruch 10 von den Eingängen der anderen Rechner zu entkoppeln.

Ein Ausführungsbeispiel der Erfindung ist nachstehend anhand der Zeichnung näher erläutert.

Die Zeichnung zeigt:
- in Fig. 1: ein Schema des erfindungsgemäß ausgebildeten Rechnersystems und
- in Fig. 2: den einzelnen Rechnern zugeordnete Baugruppen, in denen die Erfindung realisiert ist.

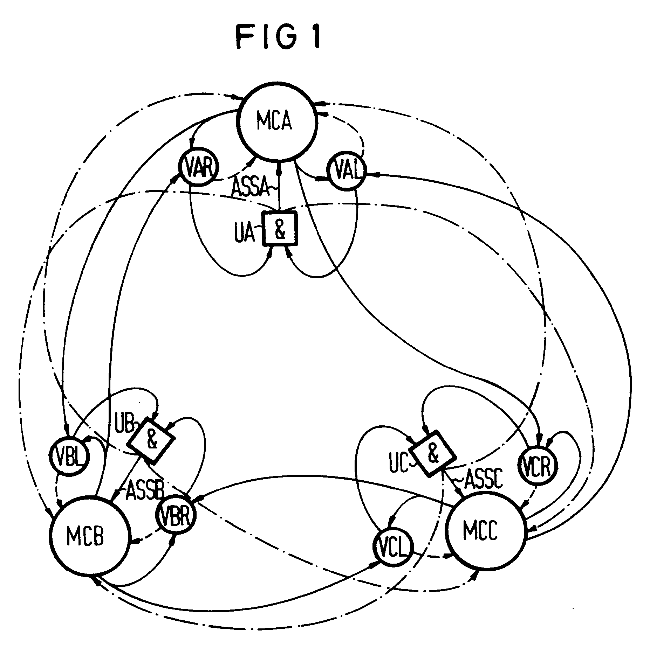

Das in Fig. 1 dargestellte sichere Mehrrechnersystem besteht aus drei signaltechnisch nicht sicheren Einzelrechnern MCA, MCB und MCC, beispielsweise Mikrocomputern, von denen einer oder zwei auf einen zu steuernden Prozeß einwirken. Die Einzelrechner erarbeiten die anfallenden Aufgaben unabhängig voneinander nach den gleichen Programmen; sie synchronisieren sich laufend. Jedem Einzelrechner sind zwei Hardware-Vergleicher VAR (R = rechts) und VAL (L = links), VBL und VBR bzw VCL und VCR zugeordnet. Diese Vergleicher sind vorzugsweise zum bitweisen Vergleich von ihren Eingängen zugeführten seriellen Daten eingerichtet, sodaß nur wenige Leitungen zwischen den Rechnern nötig sind. Die Daten stammen jeweils von demjenigen Rechner, dem ein Vergleicher fest zugeordnet ist und von einem der Nachbarrechner. So vergleicht der Vergleicher VAR z.B. die bei Ausgaben an den internen Bussen des Rechners MCA anliegenden Daten mit den entsprechenden Daten des Rechners MCB und der Vergleicher VAL vergleicht die an den internen Bussen des Rechners MCA anliegenden Daten mit denen des Rechners MCC. Liefert einer der Rechner, beispielsweise der Rechner MCA, Daten, die verschieden sind von den entsprechenden Daten der beiden übrigen Rechner, so wird dies von den Vergleichern VAR und VAL sowie VBL und VCR erkannt. Diese Vergleicher liefern an ihren Ausgängen entsprechende Fehlersignale. Die Ausgänge der den einzelnen Rechnern zugeordneten Vergleicher sind über Fehlerspeicher auf die Eingänge zugeordneter, ebenfalls in Hardware realisierter UND-Glieder UA, UB und UC geführt. An den Ausgängen dieser UND-Glieder sind bei Erfüllung der UND-Bedingung Abschaltsignale ASSA, ASSB bzw. ASSC zum Abschalten des zugehörigen Rechners abgreifbar. Bei dem zuvor angenommenen Störfall wird ausschließlich das UND-Glied UA von dem dem gestörten Rechner MCA zugeordneten Vergleicherpaar VAR, VAL durchgesteuert, während die anderen UND-Glieder gesperrt sind. Damit ist es möglich, mit einfachsten Hardware-Schaltmitteln gezielt denjenigen Rechner zu bestimmen und aus dem Verkehr zu nehmen, bei dem eine Störung eingetreten ist. Treten gleichzeitig bei mehreren Rechnern Störungen auf, so werden alle Rechner über die ihnen zugeordneten Vergleicher und UND-Glieder abgeschaltet. Voraussetzung ist allerdings, daß die Daten durch die angenommenen Störungen in den Rechnern nicht in gleicher Weise verfälscht werden.

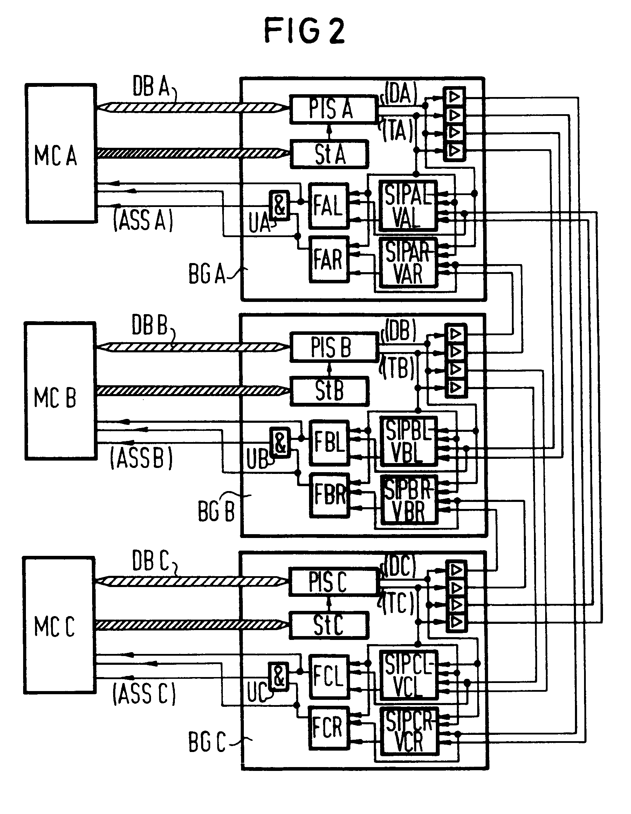

In Fig.1 sind aus Gründen der Vollständigkeit noch gestrichelt dargestellte Verbindungen für Interrupts und strichpunktiert dargestellte Verbindungen für Kontrollmeldungen vorgesehen, deren Funktion anhand der Fig.2 erläutert ist.
Dem Vergleich unterzogen sind alle Rechnerausgaben an die Peripherie. Alle anderen zu vergleichenden Daten, wie z.B. die Daten zyklischer Speicherinhaltsprüfungen, werden durch Ausgaben an eine hierfür reservierte, nicht belegte Peripherieadresse zu fiktiven Ausgaben, die wie tatsächliche Ausgaben auf Übereinstimmung geprüft werden.

Fig. 2 zeigt die Anordnung der Schaltmittel zum Erkennen und Abschalten eines gestörten Rechners. Diese sind Bestandteil von den einzelnen Rechnern MCA bis MCC zugeordneten Baugruppen BGA bis BGC; die Baugruppen können in jeder beliebiger Technik ausgeführt und zusammen mit den zugehörigen Rechnern auf gemeinsamen Platinen angeordnet sein. Es ist angenommen, daß die Rechner die zu vergleichenden Daten auf den internen Datenbus DBA, DBB bzw. DBC des jeweiligen Rechners schalten. Die von den Rechnern in paralleler Form bereitgestellten Daten gelangen in den zugehörigen Baugruppen auf dort befindliche Parallel/Serien-Wandler P/SA, P/SB bzw. P/SC und werden dort zur Übertragung an die Baugruppen der jeweils anderen Rechner in serielle Daten DA, DB bzw. DC umgesetzt. Dies geschieht unter Verwendung von Steuerungen StA, StB, StC zur Verarbeitung von von den zugehörigen Rechnern stammenden Steuersignalen. Die Übertragung der Daten an die Baugruppen der anderen Rechner erfolgt über Ausgabeverstärker. Die Ausgabeverstärker wirken auf in der Zeichnung nicht dargestellte strombegrenzende Widerstände sowohl auf der Sende- als auch auf der Empfangsseite des Rechnersystems; über diese Schnittstelle sind die jeweils zusammenwirkenden Rechner des Rechnersystems gegenseitig entkoppelt.
Jede Baugruppe enthält ferner die beiden dem jeweiligen Rechner zugeordneten Vergleicher VAL und VAR, VBL und VBR bzw. VCL und VCR, die auf den Baugruppen mit Serien/Parallel-Wandlern S/PAL und S/PAR, S/PBL und S/PBR bzw.S/PCL und S/PCR zur Serien/Parallel-Wandlung der übermittelten Daten baulich vereinigt sind. Dem einen Eingang der Vergleicher werden die am Ausgang des Parallel/Serien-Wandlers der betreffenden Baugruppe abgeifbaren seriellen Daten zugeführt, dem anderen Eingang die in serieller Form übermittelten Daten des jeweiligen Partnerrechners. Dabei empfängt der Vergleicher VAL die Daten DC des Rechners MCC, der Vergleicher VAR die Daten DB des Rechners MCB, der Vergleicher VBL die Daten DA des Rechners MCA, der Vergleicher VBR die Daten DC des Rechners MCC, der Vergleicher VCL die Daten DB des Rechners MCB und der Vergleicher VCR die Daten DA des Rechners MCA. Die Übernahme der Daten in die Vergleicher und die Serien/Parallel-Wandler und die spätere Übernahme der Vergleichsergebnisse in nachgeschaltete Fehlerspeicher erfolgt unter Steuerung von Taktsignalen TA, TB bzw. TC von den einzelnen Rechnern zugeordneten Taktgebern. Die Taktsignale werden darüber hinaus auch den entsprechenden Steuereingängen der Vergleicher in den Partnerbaugruppen zugeführt und veranlassen dort unabhängig von den Taktsignalen des jeweils zugeordneten Rechners die Einleitung von Vergleichsvorgängen immer dann, wenn der die Taktsignale generierende Rechner seinen Vergleichsadreßbereich aufruft. Hierdurch wird erreicht, daß auch bei einem fehlerhaft oder gar nicht mehr arbeitenden Rechner von den noch intakten Rechnern her Vergleichsvorgänge eingeleitet werden, die bei der angenommenen Störung zum Erkennen der Störung und zum Abschalten des davon betroffenen Rechners führen. Den Ausgängen der Vergleicher nachgeschaltet sind mehrstufige Fehlerspeicher FAL und FAR, FBL und FBR bzw. FCL und FCR. Hier werden die von den Vergleichern ggf. ausgelösten Fehlermeldungen gespeichert und bis zum Systemrücksetzen festgehalten. Bei paarweisen Fehlermeldungen wird die UND-Verknüpfung dieser Fehlermeldungen in den zugeordneten UND-Gliedern UA, UB bzw UC vorgenommen und der zugehörige Rechner stillgesetzt. Dies geschieht über die am Ausgang der UND-Glieder abgreifbaren Abschaltsignale ASSA, ASSB bzw. ASSC.
Das Ausgangssignal eines jeden Fehlerspeichers wird über je einen Interrupt dem zugeordneten Rechner gemeldet, so daß die ausfallfreien Rechner die Fehlfunktion eines anderen Rechners durch Datenvergleich feststellen und die ordnungsgerechte Abschaltung (ASSA) kontrollieren können. Hierzu werden entsprechende Kontrollmeldungen zwischen den einzelnen Rechnern des Rechnersystems ausgetauscht (Fig.1, strichpunktierte Linien). Wenn ein ausgefallener Rechner sich nicht abschaltet, veranlassen die ausfallfreien Rechner das Abschalten des Rechnersystems, beispielsweise durch Inaktivschalten ihrer Ausgabetore. Der Vergleich einander entsprechender Daten der Rechner setzt eine synchrone Arbeitsweise der Rechner voraus. Bei der Inbetriebnahme des Rechnersystems und bei jedem Neustart eines Einzelrechners zum Zwecke seiner Aktualisierung ist dieser Synchronismus noch nicht gegeben. Der Vergleich, der üblicherweise (auch) von den Partnerrechnern ausgelöst wird, muß daher vorübergehend gesperrt werden, da sonst sofort wieder die Abschaltung des neugestarteten Rechners ausgelöst würde. Mit dem ersten Vergleich, den der neugestartete Rechner selbst veranlaßt, kann die Sperre wieder aufgehoben werden.

Da die Vergleicher aus wenigen, hochzuverlässigen Bauelementen aufgebaut sind und in den paarweise zusammenwirkenden Rechnern redundant betrieben werden, ist es nicht erforderlich, sie signaltechnisch sicher auszuführen; das Erkennen und Abschalten defekter Rechner kann also unter Verwendung von herkömmlichen Vergleichern beliebiger Technik geschehen.

Das durch Hardwarevergleicher bewirkte Feststellen und Abschalten eines gestörten Einzelrechners läßt sich auch erreichen, wenn statt der aktuellen Daten auf den Rechnerbussen die an den Ausgängen der Rechner auftretenden Verarbeitungsergebnisse miteinander verglichen werden wie es z.B. bei dem im Stand der Technik erwähnten SELMIS-Rechnersystem der Fall ist.

## Patentansprüche

1. Mehrrechnersystem hoher Sicherheit mit drei Rechnern, welche alle die gleichen Informationen unabhängig voneinander verarbeiten und welche die auf ihren internen Bussen anliegenden Daten und/oder die von ihnen erarbeiteten Ergebnisse oder Teilergebnisse - ggf. nach Synchronisation - externen Vergleichern zuführen, die bei Übereinstimmung der Rechnerdaten oder Rechnerergebnisse von mindestens zwei Rechnern diese Daten oder Ergebnisse ausgeben und die beim Feststellen voneinander abweichender Daten oder Ergebnisse den die fehlerhaften Daten oder Ergebnisse liefernden Rechner bestimmen und unwirksam schalten, **dadurch gekennzeichnet,** daß jedem Rechner (z.B. MCA) zwei Hardware-Vergleicher (VAL, VAR) zum individuellen Vergleich der von ihm stammenden Daten (DA) oder Ergebnisse mit den Daten (DB, DC) oder Ergebnissen des einen (MCB) sowie des anderen Rechners (MCC) des Mehrrechnersystems zugeordnet sind,
und daß die Ausgänge der jedem Rechner (MCA) zugeordneten Vergleicher (VAL, VAR) auf eine Hardware-UND-Verknüpfung (UA) geführt sind, die dann und nur dann den jeweils zugehörigen Rechner (MCA) abschaltet, wenn beide auf diese UND-Verknüpfung speisenden Vergleicher (VAL, VAR) voneinander abweichende Daten an ihren Eingängen erkennen.

2. Mehrrechnersystem nach Anspruch 1, **dadurch gekennzeichnet,** daß die einem Rechner (MCA) zugeordneten beiden Vergleicher (VAL, VAR) ausgangsseitig auf gesonderte Fehlerspeicher (FAL, FAR) geführt sind, die beim Feststellen voneinander abweichender Daten an den Eingängen der sie speisenden Vergleicher (VAL, VAR) individuell einstellbar sind und daß die beiden Fehlerspeicher ausgangsseitig an die Eingänge eines ein Abschaltsignal (ASSA) für den zugehörigen Rechner (MCA) liefernden UND-Gliedes (UA) angeschlossen sind.

3. Mehrrechnersystem nach Anspruch 1 oder 2, **dadurch** **gekennzeichnet,** daß den Rechnern (MCA) die Potentiale an den Ausgängen der den anderen Rechnern (MCB, MCC) zugeordneten UND-Glieder (UB, UC) zu Kontrollzwecken zugeführt sind und daß die ausfallfreien Rechner die Abschaltung des Rechnersystems veranlassen, wenn ein als defekt erkannter Rechner sich nicht selbst abschaltet.

4. Mehrrechnersystem nach einem der Ansprüche 1 bis 3, **dadurch gekennzeichnet,** daß jedem Rechner (MCA) eine Baugruppe (BGA) zugeordnet ist mit einem ausgangsseitig an die internen Busse (DBA) des Rechners oder den Rechnerausgang angeschlossenen Parallel/Serien-Wandler (P/SA), von dem aus die an den Rechnerbussen oder am Ausgang des Rechners anliegenden Daten (DA) an die Baugruppen (BGB, BGC) der anderen Rechner (MCB, MCC) gelangen und daß jede Baugruppe (z.B. BGA) zwei Vergleicher (VAL, VAR) aufweist, deren Eingänge zum einen an den Ausgang des Parallel/Serien-Wandlers (P/SA) dieser Baugruppe (BGA) und zum anderen an den Ausgang des Parallel/Serien-Wandlers (P/SC, P/SB) derjenigen Baugruppe (BGC, BGB) angeschlossen sind, mit deren Daten sie sich zu vergleichen hat.

5. Mehrrechnersystem nach den Ansprüchen 2 und 4, **dadurch** **gekennzeichnet,** daß die Fehlerspeicher (FAL, FAR) von den Vergleichern gesetzt werden, die ihrerseits über Parallel/Serien-Wandler (S/PAL, S/PAR) geladen werden.

6. Mehrrechnersystem nach den Ansprüchen 2 und 5, **dadurch** **gekennzeichnet,** daß die an den Ausgängen der Fehlerspeicher (FAL, FAR) abgreifbaren Signale als Interrupts den zugehörigen Rechner (MCA) vom Ansprechen eines seiner Vergleicher (VAL, VAR) informieren.

7. Mehrrechnersystem nach Anspruch 6, **dadurch** **gekennzeichnet,** daß die an den Ausgängen der Fehlerspeicher (FAL, FAR) abgreifbaren Signale zum An- und Abschalten von Leuchtdioden für die optische Kennzeichnung des jeweiligen Vergleicherzustandes verwendet sind.

8. Mehrrechnersystem nach einem der Ansprüche 4 oder 5, **dadurch gekennzeichnet,** daß jeder Rechner (MCA) einen eigenen Taktgeber aufweist, dessen Taktsignale (TA) als Übernahmetakt während jedes Vergleichsvorganges in allen Baugruppe (BGA, BGB, BGC) die Übernahme seiner Daten (DA) durch die Vergleicher (VAL, VAR, VBL, VCR) und am Ende der Datenübertragung als Vergleichertakt die Übernahme der Vergleichsergebnisse aus den Vergleichern (VAL, VAR, VBL, VCR) in die Fehlerspeicher (FAL, FAR, FBL, FCR) der Baugruppen veranlassen und daß jeder Vergleicher zur Initiierung eines Vergleichsvorganges zwei einzeln einstellbare Taktsignaleingänge aufweist, von denen der eine durch die Taktsignale (TA) des eigenen Taktgebers und der andere durch die Taktsignale (TC, TB) desjenigen Rechners (MCC, MCB) gesteuert ist, der zusammen mit dem eigenen Rechner (MCA) auf den betreffenden Vergleicher einspeist.

9. Mehrrechnersystem nach Anspruch 1, **dadurch** **geeknnzeichnet,** daß alle Ausgaben (DA) der Rechner (MCA) an die Peripherie verglichen werden und daß alle anderen zu vergleichenden Daten beim Ausgeben der Daten an eine reservierte, nicht belegte Peripherieadresse verglichen werden.

10. Mehrrechnersystem nach einem der Ansprüche 2 bis 9, **dadurch gekennzeichnet,** daß die Ausgänge für Daten (DA) und Taktsignale (TA) jeder Baugruppe (BGA) zu den Daten- und Taktsignaleingängen der beiden anderen Baugruppen (BGB, BGC) dadurch entkoppelt sind, daß auf der Ausgangsseite ein Signalverstärker und ein strombegrenzender Entkopplungswiderstand und auf der Empfangsseite ebenfalls ein Entkopplungswiderstand angeordnet sind.

## Claims

1. A highly safe multicomputer system with three computers, all of which process the same items of information independently of one another and which supply the items of data occurring on their internal buses and/or the results or partial results collected by themselves - optionally after synchronisation - to external comparators which, in the event of the conformity of the items of computer data or computer results of at least two computers, output these items of data or results and which, when mutually differing data items or results are determined, define and switch off the computer supplying the faulty data items or results, characterised in that each computer (e.g. MCA) is assigned two hardware comparators (VAL, VAR) for the individual comparison of the data items (DA) or results emanating from itself with the data items (DB, DC) or results of the one computer (MCB) or other computer (MCC) of the multicomputer system, and that the outputs of the comparators (VAL, VAR) assigned to each computer (MCA) lead to a hardware AND-operation (UA) which switches off the respective associated computer (MCA) only when both of the comparators (VAL, VAR) feeding this AND-operation recognise mutually differing data items at their inputs.

2. A multicomputer system as claimed in Claim 1, characterised in that the two comparators (VAL, VAR) assigned to a computer (MCA) lead at their output end to separate fault stores (FAL, FAR) which, when mutually differing data items are determined at the inputs of the comparators (VAL, VAR) by which they are fed, are individually adjustable, and that the two fault stores are connected at their output end to the inputs of an AND-circuit (UA) which supplies a switch-off signal (ASSA) for the associated computer (MCA).

3. A multicomputer system as claimed in Claim 1 or 2, characterised in that the computers (MCA) are supplied for monitoring purposes with the potentials at the outputs of the AND-circuits (UB, UC) assigned to the other computers (MCB, MCC), and that the malfunction-free computers initiate the switching off of the computer system when a computer recognised as defective does not switch itself off.

4. A multicomputer system as claimed in one of Claims 1 to 3, characterised in that each computer (MCA) is assigned an assembly (BGA) with a parallel/serial converter (P/SA) which at its output end is connected to the internal buses (DBA) of the computer or to the computer output and from which the data items (DA) occurring on the computer buses or at the output of the computer are fed to the assemblies (BGB, BGC) of the other computers (MCB, MCC), and that each assembly (e.g. BGA) comprises two comparators (VAL, VAR), the inputs of which are connected on the one hand to the output of the parallel/serial converter (P/SA) of this assembly (BGA) and on the other hand to the output of the parallel/serial converter (P/SC, P/SB) of the assembly (BGC, BGB) with the data of which the assembly is to compare itself.

5. A multicomputer system as claimed in Claims 2 and 4, characterised in that the fault stores (FAL, FAR) are set by the comparators which themselves are loaded via parallel/serial converters (S/PAL, S/PAR).

6. A multicomputer system as claimed in Claims 2 and 5, characterised in that the signals which can be tapped at the outputs of the fault stores (FAL, FAR) inform the associated computer (MCA) as interrupts of the response of one of its comparators (VAL, VAR).

7. A multicomputer system as claimed in Claim 6, characterised in that the signals which can be tapped at the outputs of the fault stores (FAL, FAR) are used for the switching on and off of LEDs for the optical identification of the respective comparator state.

8. A multicomputer system as claimed in one of Claims 4 or 5, characterised in that each computer (MCA) comprises its own clock generator, the clock signals (TA) of which, as transfer clock, during each comparison procedure in all the assemblies (BGA, BGB, BGC) initiate the transfer of its data items (DA) to the comparators (VAL, VAR, VBL, VCR) and at the end of the data transmission, as comparator clock, initiate the transfer of the comparison results from the comparators (VAL, VAR, VBL, VCR) into the fault stores (FAL, FAR, FBL, FCR) of the assemblies, and that for the initiation of a comparison procedure each comparator comprises two individually adjustable clocks signal inputs, of which one is controlled by the clock signals (TA) of the assigned clock generator and the other is controlled by the clock signals (TC, TB) of the computer (MCC, MCB) which, together with the assigned computer (MCA), feeds the respective comparator.

9. A multicomputer system as claimed in Claim 1, characterised in that all the outputs (DA) from the computers (MCA) to the periphery are compared, and that all the other data items to be compared are compared through the outputting of the data items to a reserved, unallocated peripheral address.

10. A multicomputer system as claimed in one of Claims 2 to 9, characterised in that the outputs for data (DA) and clock signals (TA) of each assembly (BGA) are decoupled from the data- and clock signal inputs of the two other assemblies (BGB, BGC) in that a signal amplifier and a current-limiting decoupling resistor are arranged at the output end and a decoupling resistor is likewise arranged at the receiving end.

## Revendications

1. Système à ordinateurs multiples de haute sécurité comportant trois ordinateurs, qui traitent tous les mêmes informations, d'une manière indépendante les uns des autres, et qui envoient les données, qui sont appliquées à leurs bus internes, et/ou les résultats ou résultats partiels élaborés par eux - éventuellement après une synchronisation - à des comparateurs extérieurs, qui, en cas de coïncidence des données ou des résultats d'au moins deux ordinateurs, fournissent ces données ou ces résultats et qui, lorsqu'il est établi que les données ou les résultats diffèrent, déterminent l'ordinateur qui fournit les données erronées ou les résultats erronés et mettent cet ordinateur à l'état inactif, caractérisé en ce que
à chaque ordinateur (par exemple MCA) sont associés deux comparateurs (VAL, VAR) matériels servant à comparer individuellement les données (DA) ou les résultats, qui proviennent de cet ordinateur, aux données (DB, DC) ou aux résultats de l'un (MCB) des ordinateurs ainsi que de l'autre ordinateur (MCC) du système à ordinateurs multiples, et
les sorties des comparateurs (VAL, VAR), qui sont associés à chaque ordinateur (MCA), sont reliées à un circuit (UA) combinatoire matériel ET, qui ne débranche l'ordinateur respectivement associé (MC), que lorsque les deux comparateurs (VAL, VAR), qui alimentent ce circuit combinatoire ET, identifient des données, qui diffèrent les unes des autres, sur leurs entrées.

2. Système à ordinateurs multiples suivant la revendication 1, caractérisé en ce que les deux comparateurs (VAL, VAR) associés à un ordinateur (MCA) sont reliés, côté sortie, à des mémoires (FAL, FAR) particulières de défauts, qui sont réglables individuellement lorsqu'il est établi que les données présentes aux entrées des comparateurs (VAL, VAR) qui alimentent ces mémoires, diffèrent les unes des autres, et les deux mémoires de défauts sont connectées, côté sortie, aux entrées d'un circuit ET (UA) fournissant un signal (ASSA) de débranchement pour l'ordinateur (MCA) associé.

3. Système à ordinateurs multiples suivant la revendication 1 ou 2, caractérisé en ce que les potentiels présents sur les sorties des circuits ET (UB, UC) associés aux autres ordinateurs (MCB, MCC) sont envoyés, à des fins de contrôle, aux ordinateurs (MCA), et les ordinateurs non défaillants provoquent le débranchement du système d'ordinateurs, lorsqu'un ordinateur identifié comme défectueux ne se débranche pas de lui-même.

4. Système à ordinateurs multiples suivant l'une des revendications 1 à 3, caractérisé en ce qu'à chaque ordinateur (MCA) est associé un module (BGA) qui comporte un convertisseur (P/SA) parallèle/série, connecté, côté sortie, aux bus internes (DBA) de l'ordinateur ou à la sortie de l'ordinateur, et à partir de ce convertisseur les données (DA), présentes sur les bus des ordinateurs ou à la sortie de l'ordinateur, parviennent aux modules (BGB, BGC) des autres ordinateurs (MCB, MCC), et chaque module (par exemple BGA) comporte deux comparateurs (VAL, VAR), dont les entrées sont connectées d'une part à la sortie du convertisseur (P/SA) parallèle/série de ce module (BGA) et d'autre part à la sortie du convertisseur (P/SC, P/SB) parallèle/série de celui des modules (BGC, BGB), ayant les données auxquelles il doit se comparer.

5. Système à ordinateurs multiples suivant les revendications 2 et 4, caractérisé en ce que les mémoires (FAL, FAR) de défauts sont positionnées par les comparateurs, qui sont chargés, pour leur part, par l'intermédiaire de convertisseurs (S/PAL, S/PAR) parallèle/série.

6. Système à ordinateurs multiples suivant les revendications 2 et 5, caractérisé en ce que les signaux, qui peuvent être prélevés sur les sorties des mémoires (FAL, FAR) de défauts, informent, en tant qu'interruptions, l'ordinateur (MCA) associé, de la réponse de l'un de ses comparateurs (VAL, VAR).

7. Système à ordinateurs multiples suivant la revendication 6, caractérisé en ce que les signaux, qui peuvent être prélevés sur les sorties des mémoires (FAL, FAR) de défauts, sont utilisés pour la mise en marche et en arrêt de diodes à luminescence pour caractériser optiquement l'état respectif du comparateur.

8. Système à ordinateurs multiples suivant l'une des revendications 4 ou 5, caractérisé en ce que chaque ordinateur (MCA) a un générateur de cadence propre, dont les signaux (TA) de cadence provoquent, en tant que cadence de transfert, pendant chaque opération de comparaison dans tous les modules (BGA, BGB, BGC), le transfert de ses données (DA) par les comparateurs (VAL, VAR, VBL, VCR), et provoquent en tant que cadence de comparateur, à la fin de la transmission de données, le transfert des résultats de comparaison issus des comparateurs (VAL, VAR, VBL, VCR) dans les mémoires (FAL, FAR, FBL, FCR) de défauts des modules, et chaque comparateur a, pour initialiser une opération de comparaison, deux entrées différentes et réglables de signaux de cadence, dont l'une est commandée par les signaux (TA) de cadence du générateur de cadence propre et dont l'autre est commandée par les signaux (TC, TB) de cadence de celui des ordinateurs (MCC, MCB), qui, conjointement avec l'ordinateur (MCA) particulier, alimente le comparateur concerné.

9. Système à ordinateurs multiples suivant la revendication 1, caractérisé en ce que tous les signaux (DA) de sortie des ordinateurs (MCA) situés à la périphérie sont comparés et que toutes les autres données devant être comparées sont comparées, lors de la délivrance des données à une adresse périphérique réservée, non occupée.

10. Système à ordinateurs multiples suivant l'une des revendications 2 à 9, caractérisé en ce que les sorties (DA) pour les données et les signaux (TA) de cadence de chaque module (BGA) sont découplées des entrées de données et de signaux de cadence des deux autres modules (BGB, BGC), par le fait qu'un amplificateur de signaux et une résistance de découplage limitant le courant sont disposés sur le côté sortie et que, également, une résistance de découplage est disposée sur le côté réception.
